# EUROPEAN PATENT SPECIFICATION

(11) **EP 1 554 934 B1**
(45) Date of publication and mention of the grant of the patent: **28.12.2011**
(21) Application number: 03754136.4
(22) Date of filing: 15.10.2003
(51) Int. Cl.: A23G 3/00, A21D 13/00

(54) **PROCESS FOR PRODUCING SNACK, SNACK AND SNACK-LIKE FOOD**
VERFAHREN ZUR HERSTELLUNG VON SNACKS, SNACK UND SNACKARTIGE LEBENSMITTEL
PROCÉDÉ DE PRODUTION D'UN EN-CAS, EN-CAS ET ALIMENT DE TYPE EN-CAS

(30) Priority: 24.10.2002 WO PCT/JP02/11056
(43) Date of publication of application: 20.07.2005
(60) Divisional application: 08006135.1
(73) Proprietor: The Oyatsu Company, Ltd., Ichishi-gu, Mie 515-2592 (JP)
(72) Inventor: TAKEO, Hideki, Ichishi-gun, Mie 515-2592 (JP); KAWAMURA, Akiko, Ichishi-gun, Mie 515-2592 (JP); HIROTO, Sakiko, Ichishi-gun, Mie 515-2592 (JP)
(74) Representative: Henseler, Daniela
(86) International application number: PCT/JP2003/013190
(87) International publication number: WO 2004/037009

(56) References cited:
- FR-A- 2 409 007
- JP-A- 5 227 890
- JP-A- 49 109 564
- JP-A- 63 222 653
- JP-A- 2000 217 516
- JP-A- 2001 078 674
- US-A- 4 091 720
- US-B1- 6 202 544
- US-B1- 6 397 730
- PATENT ABSTRACTS OF JAPAN vol. 2000, no. 20, 10 July 2001 (2001-07-10) & JP 2001 078674 A (NISSHIN FLOUR MILLING CO LTD), 27 March 2001 (2001-03-27)
- PATENT ABSTRACTS OF JAPAN vol. 013, no. 015 (C-559), 13 January 1989 (1989-01-13) & JP 63 222653 A (BAIKA KOGYO KK), 16 September 1988 (1988-09-16)

## Description

### FIELD OF THE INVENTION

The present invention relates to a method for producing a snack (a easy-to-pick food made chiefly of potato or grain), and also to a snack and food like a snack.

### BACKGROUND TECHNOLOGY

According to a survey of the snack market shares in Japan by material type, products made of potato stood first in the list accounting for about 58% of the market, products made of corn was the second with about 30%, and products made of wheat came in third with about 9%. In other words, products made of those three materials occupy the majority of the market. Despite the fact that wheat is consumed in the largest quantities in the world, there are very few kinds of snacks made of wheat flour, so that "Kappa Ebisen" (registered trademark) and "Baby Star Ramen" (registered trademark) jointly occupy about 56% of the market of snacks made of wheat.

In the market environment as described above, sales proceeds of snacks are leveling off, and even though products from new materials other than the above-mentioned three major materials were developed, they have not yet found a firm place in the market.

On the other hand, in anticipation of aging society spreading on a world scale in the future, people's health-consciousness is becoming increasingly strong in years to come, and as a result, products made with health in mind will be looked for as snacks. Having large amounts of oil content, potato chips are not regarded as good for health. In contrast, the practice of eating bread has been established in many countries in the world and bread may be given a better image of being good for health by using rye or whole wheat flour, or kneading dough mixed with vegetable.

As foods for teatime made of bread as the material, only rusks or applied products of rusks are known. Rusks have long been eaten as pastries and are well established in the market. A method for producing rusks comprises a bread slicing process, a seasoning process, and a drying process. For example, rusks are produced by cutting bread into thin and small slices, and spreading powdered sugar mixed with egg white on the surfaces of the slices, and baking again. The texture of rusks you feel is close to that of biscuits.

Rusks as snacks in sizes easy to pick by hand are available in the market, but the texture you feel is close to biscuits, not the light texture you get from eating potato chips.

A technology closest to the method of the present invention is described in JP-A-5-227890. The method described in this Patent Gazette comprises mixing one or not less than two kinds of materials selected from wheat flour, corn flour and potato powder with water, transforming the mixture into a viscous α -starch dough, rolling a lump of dough into a sheet dough, pressing cake dies into the sheet of dough to obtain small plates, and then drying the small plates and pressing each plate between convex and concave dies, which are engaged,to thereby form a small molded chip. This small chip is further dried and then heated to expand. The above-mentioned Japanese Patent Gazette states that by this method, it is possible to produce cubic snacks in the form of chips, which were hitherto considered difficult to produce.

Meanwhile, as the method for producing foods for teatime made from bread, there is not any other conventional method than the above-mentioned method for producing rusks.

Known from US-4091720 and US-6397730, respectively, is a sandwich toaster for making hot sandwiches. A filling is sandwiched between two sliced pieces of bread. The two sliced pieces of bread are pressed and heated by both sides in the sandwich toaster, so that the two sliced pieces of bread are unified into one piece.

An object of the present invention is to obtain snacks similar in texture of potato chips when they are made from materials other than potato, bread for example.

Another object of the present invention is to provide foods for teatime made from bread as material, other than rusks and applied products of rusks.

### DISCLOSURE OF THE INVENTION

The present invention provides a method of producing a snack in accordance with claim 1.

Further, the present invention provides a method of producing a snack in accordance with claim 2.

According to the present invention, the pressurization by the pressurizing surfaces does not include rolling by a pair of rollers. In other words, the process of heating under pressure in the methods of the present invention corresponds to a so-called press molding, wherein both pressurizing surfaces come into contact with the full surfaces of the material at the same time.

In the method of the present invention, for the pressurizing surfaces, flat or curved surfaces may be used.

A processed product made by using flat surfaces for the pressurizing surfaces and according to claim 1 is formed with at least outer edges curled.

A processed product made by using flat surfaces for the pressurizing surfaces and according to claim 2 is formed in a substantially flat plate shape.

A processed product made by using curved surfaces for the pressurizing surfaces and according to claim 1 is formed to follow the shape of those curved surfaces with curled outer edges. Especially when surfaces curved in a bow shape (bow-shaped surfaces) are used for the pressurized surfaces, a product is in a shape curled such that open-end portions of circular-arc of the bow shape come close together, and a processed product in a stick shape is sometimes obtained if the curling occurs to an excessive degree.

A product made by using curved pressurizing surfaces and according to claim 2 is formed in a shape that substantially follows the shape of the curved pressurizing surfaces.

According to the present invention, by using a material comprising bread, it is possible to obtain a "snack made from bread - with a texture close to potato chips." Unlike with potato chips, this snack need not be fried in oil, and therefore matches the health-conscious trend of the times.

Among materials used in the methods of the present invention, there are (1) bread without brown-baked crust, (2) brown-baked crusted bread, and (3) crushed bread crumbs. More detailed descriptions of the shape of (1) and (2) above are (4) a sliced bread not less than 1mm (not more than 50mm) in thickness with the brown-baked crust removed and (5) a sliced bread not less than 1mm (not more than 50mm) in thickness with the crust remaining along the outer edges. A more detailed description of the shape of (3) is (6) crumbs made by crushing the brown-baked crust of bread.

The kinds of bread used as material in the present invention include bread, French bread, rolls of bread, nan bread, sweet bun, and any other kinds of bread classified as "bread".

The present invention also provides snacks produced by the methods of the present invention. Note that the above-mentioned foods like snack are foods not classified in foods for teatime (nonessential grocery foods other than meals) and which are manufactured with a texture and a shape suitable as snacks.

### BRIEF DESCRIPTION OF THE DRAWINGS

Figs. 1A to 1E are diagrams for process-by-process explanation of methods of the first and the fifth embodiments of the present invention;
Fig. 2 is a perspective view showing a shape of a snack obtained by the method of the first embodiment of the present invention;
Figs. 3A to 3C are diagrams for process-by-process explanation of methods of the second and the sixth embodiments of the present invention;
Fig. 4 is a perspective view showing a shape of a snack obtained by the method of the second embodiment of the present invention;
Figs. 5A to 5D are diagrams for process-by-process explanation of methods of the third and the seventh embodiments of the present invention;
Fig. 6 is a perspective view showing a shape of a snack obtained by the method of the third embodiment of the present invention;
Figs. 7A to 7C are diagrams for process-by-process explanation of methods of the fourth and the eighth embodiments of the present invention;
Fig. 8 is a perspective view showing a shape of a snack obtained by the method of the fourth embodiment of the present invention;
Fig. 9 is a perspective view showing a shape of a snack obtained by the method of the fifth embodiment of the present invention;
Fig. 10 is a perspective view showing a shape of a snack obtained by the method of the sixth embodiment of the present invention;
Fig. 11 is a perspective view showing a shape of a snack obtained by the method of the seventh embodiment of the present invention;
Fig. 12 is a perspective view showing a shape of a snack obtained by the method of the eighth embodiment of the present invention;
Figs. 13A to 13E are diagrams for process-by-process explanation of the method of the ninth embodiment of the present invention;
Fig. 14 is a perspective view showing a shape of a snack obtained by the method of the ninth embodiment of the present invention;
Figs. 15A to 15C are diagrams for process-by-process explanation of the method of the tenth embodiment of the present invention;
Fig. 16 is a perspective view showing a shape of a snack obtained by the method of the tenth embodiment of the present invention;
Figs. 17A to 17D are diagrams for process-by-process explanation of the method of the eleventh embodiment of the present invention;
Fig. 18 is a perspective view showing a shape of a snack obtained by the method of the eleventh embodiment of the present invention;
Figs. 19A to 19C are diagrams for process-by-process explanation of the method of the twelfth embodiment of the present invention;
Fig. 20 is a perspective view showing a shape of a snack obtained by the method of the twelfth embodiment of the present invention;
Figs. 21A and 21B are diagrams for process-by-process explanation of methods of the thirteenth and the fourteenth embodiments not forming part of the present invention as such;
Fig. 22 is a perspective view showing a shape of a snack obtained by the method of the thirteenth embodiment of the present invention (not forming part of the invention as such); and
Fig. 23 is a perspective view showing a shape of a snack obtained by the method of the fourteenth embodiment of the present invention (not forming part of the invention as such).

### BEST MODE FOR CARRYING OUT THE INVENTION

### (First Embodiment)

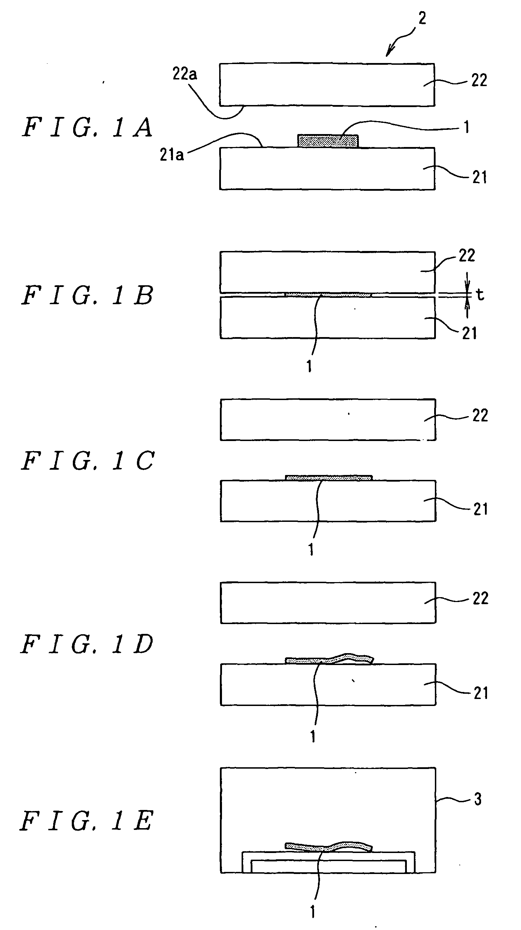

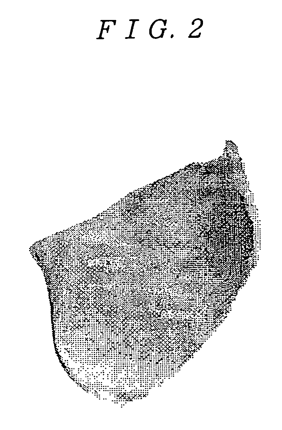

A method for producing a snack according to a first embodiment of the present invention will be described with reference to Figs. 1A to 1E and 2. In this method, a slice cut out of bread with the brown-baked crust removed and in a thickness of not less than 1mm is used as material and placed between a pair of flat pressurizing surfaces, and heated while a pressure is applied until the moisture content of the material decreases to a predetermined value less than the original moisture content of the material (a value not lower than 6.0 mass% and below the original moisture content of the material ), and after the heating, the material is dried without applying pressure. (By additionally carrying out this drying process, a processed product with the curled outer edges is obtained).

First, from bread available on the market (with a moisture content of about 35 mass%, for example), the whole of the brown-baked crust is removed with a slicer. Then, by further cutting this bread with the slicer, a white (crustless) sliced bread with a size of 50mm × 30mm × 10mm (thickness) is obtained.

Next, as shown in Fig. 1A, this bread 1 is heated under pressure in a press device 2. In this pressure unit 2, a pair of flat pressurizing surfaces are composed by an upper surface 21a of a lower part 21 made of steel and a lower surface 22a of an upper part 22 made of steel. The bread 1 is put on the upper surface 21a of the lower part 21 of the press device 2.

Under this condition, as shown in Fig. 1B, the upper part 2 is lowered to press the bread 1 until the gap between the pair of pressurizing surfaces 21a and 22a becomes a predetermined gap t. The gap t is to be set suitably as one thinks fit according to the thickness of the bread 1 as material and the thickness of a processed product to produce. Under this condition, the bread is heated and pressurized simultaneously by holding it at a predetermined temperature and under a predetermined pressure for a predetermined length of time until the moisture content reaches about 30 mass%, for example.

After the elapse of a predetermined time, as shown in Fig. 1C, the upper part 22 is raised and the pressure is released. Under this condition, though the bread 1 has been pressed into a flat plate shape, because the moisture content is still high, as time passes, the bread changes from a flat shape to a shape that has a slightly curved portion as shown in Fig. 1D.

Then, as shown in Fig. 1E, the bread 1 is extracted and placed in a hot air dryer 3 and held at a predetermined temperature for a predetermined time so as to be dried by hot air until the moisture content of the bread 1 decreases to 5.9 mass% or lower, for example. Therefore, a processed product in a shape that the outer edges are curled is obtained as shown in Fig. 2, for example. Further, by applying seasoning or the like to the processed product, a snack is completed.

Incidentally, the processed product shown in Fig. 2 was obtained as follows. From bread ("Honjikomi" (Brand name) by Fujipan Co., Japan) with a moisture content of 36.3 mass% and an oil content of 2.5 mass%, the whole crust was removed and a slice was cut out of the bread with a slicer in a size of 50mm × 30mm × 10mm (thickness), and the slice was used as material. And the above-mentioned gap t was set at 2mm, conditions of heating under pressure were 60°C temperature, 4.9 × 10⁻¹MPa pressure and 90sec holding time, and a drying condition was 90°C for 30min.

The moisture content of the bread just after the heating was 29.1 mass%, the thickness of the bread just after the heating was 1.7mm, the moisture content of the bread (processed product) after the drying was 4.5 mass%, and the thickness of the bread (processed product) after the drying was 1.7mm. The texture of the processed product was similar to that of potato chips.

### (Second Embodiment)

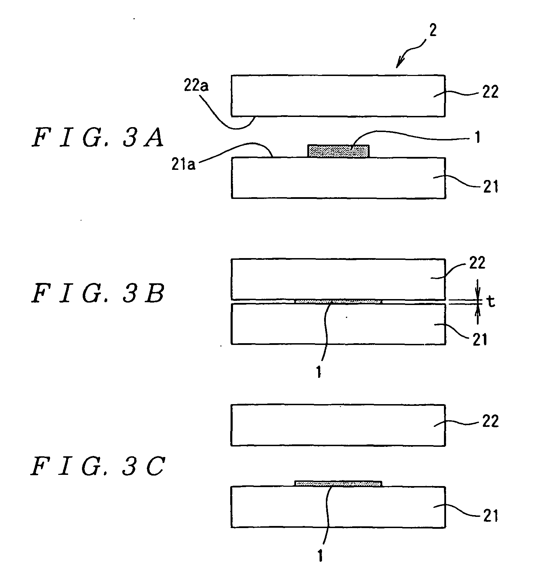

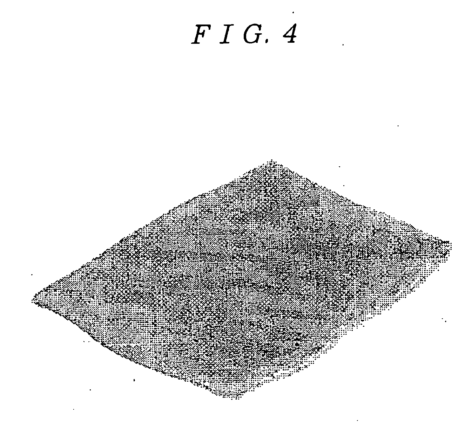

A method for producing a snack according to a second embodiment of the present invention will be described with reference to Figs. 3A to 3C and 4. In this method, a slice cut out of bread as material with the brown-baked crust removed and in a thickness of not less than 1mm is placed between a pair of flat pressurizing surfaces and heated under pressure until the moisture content decreases to a predetermined value (not more than 5. 9 mass%) less than the original moisture content of the material.

To begin with, from bread available on the market (bread with a moisture content of about 35 mass%, for example), the whole brown-baked crust is removed with a slicer. Then, by cutting the bread with the slicer, a white (crustless) sliced bread with a size of 50mm × 30mm × 10mm (thickness) is obtained.

Then, as shown in Fig. 3A, the bread 1 is heated under pressure by the press device 2. In the press device 2, a pair of flat pressurizing surfaces is composed by the upper surface 21a of the steel-made lower part 21 and the lower surface 22a of the steel-made upper part 22. The bread 1 is placed on the upper surface 21a of the lower part 21 of the press device 2.

Under this condition, as shown in Fig. 3B, the upper part 22 is lowered to press the bread 1 until the distance between the pair of pressurizing surfaces 21a and 22a reaches a predetermined gap t. This gap t is to be set suitably at one' s discretion according to the thickness of bread 1 as material and the thickness of a processed product to produce. Under this condition, the material is heated and pressurized simultaneously by holding it at a predetermined temperature and a predetermined pressure for a predetermined time until the moisture content decreases to about 5 mass%, for example.

After the elapse of a predetermined time, as shown in Fig. 3C, the upper part 22 is raised and the pressurization is stopped. Under this condition, the bread 1 is flattened out into a substantially flat plate shape. Therefore, a processed product in a substantially flat shape is obtained as shown in Fig. 4, for example. By applying seasoning or the like to this processed product, a snack is completed.

Meanwhile, a processed product shown in Fig. 4 was obtained as follows. From bread ("Honjikomi" (Brand name) by Fujipan Co., Japan) with a moisture content of 36.3 mass% and an oil content of 2.5 mass%, the whole crust was removed and a slice was cut out of the bread with a slicer in a size of 50mm × 30mm × 10mm (thickness), and the slice was used as material. And the above-mentioned gap t was set at 2mm, and conditions of heating under pressure were 130°C temperature, 4.9 × 10⁻¹MPa pressure and 120sec holding time.

The moisture content of the processed product was 4.8 mass% and the thickness was 1.3mm. The texture of the processed product was similar to potato chips.

### (Third Embodiment)

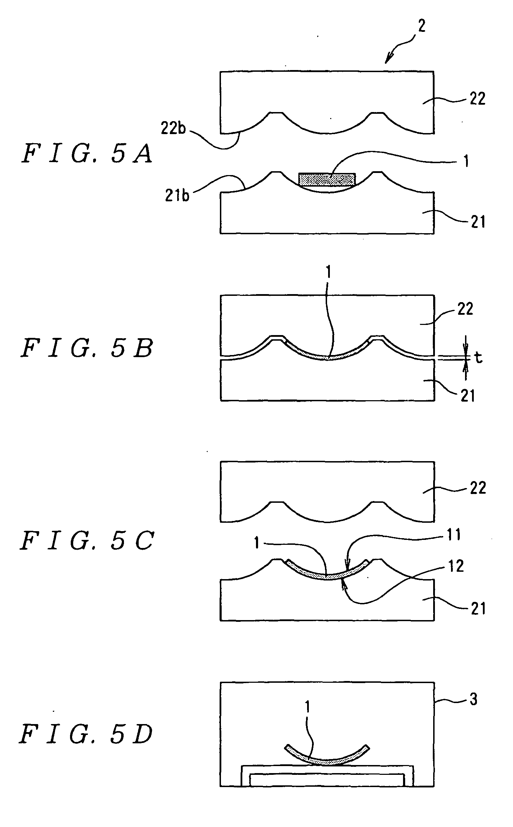

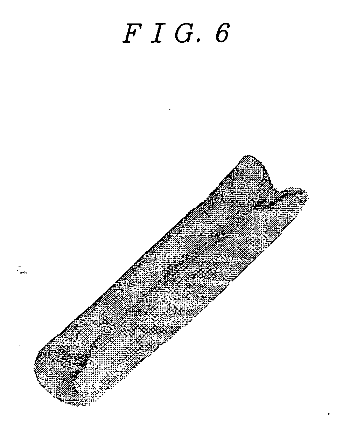

A method for producing a snack according to a third embodiment of the present invention will be described with reference to Figs. 5A to 5D and 6. In this method, a slice cut out of bread with the brown-baked crust removed and in a thickness of not less than 1mm is used as material and placed between a pair of curved pressurizing surfaces, and heated under pressure until the moisture content decreases to a predetermined value less than the original moisture content of the material (a value not less than 6.0 mass% and below the original moisture content of the material, and after the heating, the material is dried without applying pressure (further, a processed product with the curled outer edges is obtained by the above-mentioned drying process).

First, from bread available on the market (bread with a moisture content of about 35 mass% for example), the whole brown-baked crust is removed with a slicer. Then, the bread is cut with the slicer to obtain a white (crustless) slice of a size of 50mm × 30mm × 10mm (thickness).

Then, as shown in Fig. 5A, the bread 1 is heated under pressure in the press device 2. In this press device 2, bow-shaped concave surfaces 21b are formed at predetermined intervals on the upper surface of a lower part 21 made of steel, and convex surfaces 22b, which correspond to the concave surfaces 21b, are formed on the lower surface of an upper part 22 made of steel. A concave surface 21b and a convex surface 22b compose a pair of pressurizing surfaces curved in a bow shape. The bread 1 is placed on the concave surface 21b of the lower part 21 of the press device 2.

Under this condition, as shown in Fig. 5B, the upper part 22 is lowered until the distance between the pair of the concave surface 21b and the convex surface 22b reaches the predetermined gap t to press the bread 1. This gap t is to be set suitably at one's discretion according to the thickness of the bread 1 as material and the thickness of a processed product to produce. Under this condition, the material is heated and pressurized simultaneously by holding it at a predetermined temperature and a predetermined pressure for a predetermined time until the moisture content decreases to about 30 mass% for example.

After the elapse of a predetermined time, as shown in Fig. 5C, the upper part 22 is raised and the pressurization is stopped. Under this condition, the bread 1 is in a bow-shaped plate that has a concave surface 11, which corresponds to the concave surface 21b as one pressurizing surface, and a convex surface 12, which corresponds to the convex surface 22b as the other pressurizing surface. Having a still high moisture content, this bread 1 is in a shape that the concave surface 12 and the convex surface 11 partially deviate from the circular-arc of the bow shape.

Then, as shown in Fig. 5D, the bread 1 is extracted and put in a hot air dryer 3, and held at a predetermined temperature for a predetermined time to be dried by hot air in such a way that the moisture content of the bread 1 decreases to not higher than 5.9 mass%, for example. Thus, a processed product is obtained in a shape curled such that open-end portions of the circular-arc of the bow shape came close together. In some case where the curling occurs to an excessive degree, a stick-shaped processed product may be obtained as shown in Fig. 6. By applying seasoning or the like to the processed product, a snack can be completed.

Incidentally, the processed product shown in Fig. 6 was obtained as follows. From bread ("Honjikomi" (Brand name) by Fujipan Co., with a moisture content of 36.3 mass% and an oil content of 2.5 mass%, the whole crust was removed and a slice was cut out of the bread with a slicer in a size of 50mm × 30mm × 10mm (thickness), and the slice was used as material. And the above-mentioned gap t was set at 2mm and conditions of heating under pressure were 60°C temperature, 4.9 × 10⁻¹MPa pressure, and 90 sec holding time, and a drying condition was 90°C for 30min.

The moisture content of the bread just after the pressurized heating is 28.0 mass%, the thickness of the bread just after the pressurized heating was 1.9mm, the moisture content of the bread (processed product) after drying was 4.5 mass% and the thickness of the bread (processed product) was 1.8mm. The texture of the processed product) was similar to that of potato chips.

Processed products in a stick form such as shown in Fig. 6 have an advantage that they can be put in upright position in a container, so that they can be densely packed in a container and are easy to pick up when eating.

### (Fourth Embodiment)

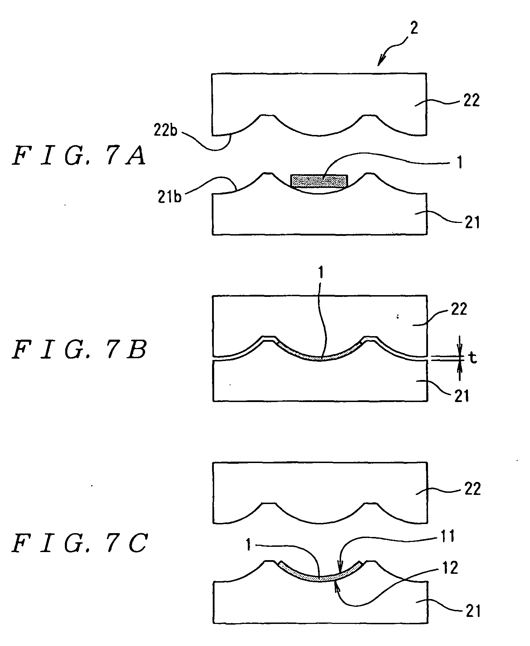

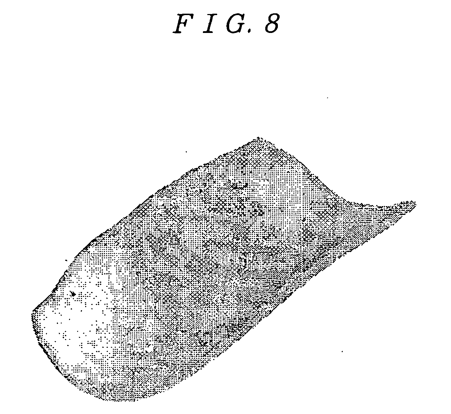

A method for producing a snack according to a fourth embodiment of the present invention will be described with reference to Figs. 7A to 7C and 8. This method comprises a pressurized heating, wherein a slice cut out of bread as material with the brown-baked crust removed and in a thickness of not less than 1mm is placed between a pair of pressurizing surfaces curved in a bow shape and heated under pressure until the moisture content of the material decreases to a predetermined value (not more than 5.9 mass%) less than the original moisture content of the material.

First, from bread on the market (bread with a moisture content of about 35 mass% for example), the whole brown-baked crust is removed with a slicer. By cutting the bread with the slicer, a white (crustless) slice is obtained in a size of 50mm × 30mm × 10mm (thickness), for example.

Next, as shown in Fig. 7A, this bread 1 is heated under pressure in the press device 2. In this press device 2, bow-shaped concave surfaces 21b are formed at predetermined intervals on the upper surface of a lower part 21 of steel, and convex surfaces 22b, which correspond to the concave surfaces 21b, are formed on the lower surface of an upper part 22 of steel. A concave surface 21b and a convex surface 22b compose a pair of pressurizing surfaces curved in a bow shape. The bread 1 is placed on the concave surface 21b of the lower part 21 of the press device 2.

Under this condition, as shown in Fig. 7B, the upper part 22 is lowered until the distance between the pair of the concave surface 21b and the convex surface 22b reaches the predetermined gap t to press the bread 1. This gap t is to be set suitably at one's discretion according to the thickness of the bread 1 as material and the thickness of a processed product to produce. Under this condition, the material is heated and pressurized simultaneously by holding it at a predetermined temperature and a predetermined pressure for a predetermined time until the moisture content decreases to about 5 mass%, for example.

After the elapse of a predetermined time, as shown in Fig. 7C, the upper part 2 is raised and the pressurization is stopped. Under this condition, the bread 1 is in a bow-shaped plate that has a concave surface 11, which correspond to the concave surface 21b as one pressurizing surface and a convex surface 12, which corresponds to the convex surface 22b as the other pressurizing surface. As a result, as shown in Fig. 8, for example, a processed product in a shape which the short-sides of a rectangular are curved in a circular-arc can be obtained. By applying seasoning or the like to this processed product, a snack is completed.

Meanwhile, a processed product shown in Fig. 8 was obtained as follows. From bread ("Honjikomi" (Brand name) by Fujipan Co., Japan) with a moisture content of 36.3 mass% and an oil content of 2.5 mass%, the whole crust was removed and a slice was cut out of the bread with a slicer in a size of 50mm × 30mm × 10mm (thickness), and the slice was used as material. And the above-mentioned gap t was set at 2mm, and conditions of heating under pressure were 130°C temperature, 4.9 × 10⁻¹MPa pressure and 120sec holding time.

The moisture content of the processed product was 4.5 mass% and the thickness was 1.0mm. The texture of the processed product was similar to potato chips.

Processed products such as shown in Fig. 8 has an advantage that because they can be piled one on top of another in a container, they can be densely stacked in a container and are easy to pick up when eating.

### (Fifth Embodiment)

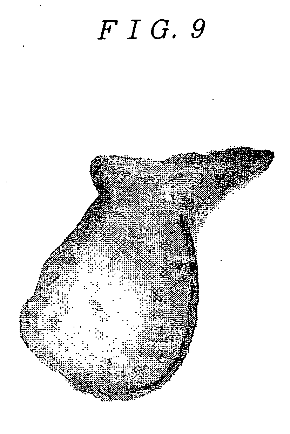

A method for producing a snack according to a fifth embodiment of the present invention will be described with reference to Figs. 1A to 1E and 9. In this method, heating, wherein a slice with a thickness of not less than 1mm cut out of bread with brown-baked crust is used as material and placed between a pair of flat pressurizing surfaces, and heated while pressure is applied until the moisture content of the material decreases to a predetermined value less than the original moisture content of the material (a value not less than 6. 0 mass% and below the original moisture content of the material), and after the heating, the material is dried without applying pressure (by additionally performing the above-mentioned drying process, a processed product with the curled outer edges is obtained).

First, by cutting French bread available on the market (bread with a moisture content of about 26 mass%, for example) with a slicer, a crusted slice of bread substantially elliptic in cross section with a 80mm major axis and a 40mm minor axis in a thickness of about 7mm is obtained.

Then, as shown in Fig. 1A, the bread 1 is heated under pressure in the press device 2. In this press 2, a pair of flat pressurizing surfaces is composed by the upper surface 21a of a steel-made lower part 21 and the lower surface 22a of a steel-made upper part 22. The bread 1 is placed on the upper surface 21a of the lower part 21 of the press device 2.

Under this condition, as shown in Fig. 1B, the upper part 22 is lowered until the distance between the pair of pressurizing surfaces 21a and 22a comes to a predetermined gap t to press the bread 1. This gap t is to be set suitably at one's discretion according to the thickness of the bread 1 as material and the thickness of a processed product to produce. Under this condition, the bread is heated and pressurized simultaneously by holding it at a predetermined temperature and a predetermined pressure for a predetermined time until the moisture content becomes about 25 mass%, for example.

After the elapse of a predetermined time, as shown in Fig. 1C, the upper part 22 is raised and the pressurization is stopped. Under this condition, the bread 1 has been pressed and is in a flat plate shape, but because the bread 1 still has a high moisture content, as time passes, the bread will changes from a flat shape to a shape that has a slightly curved portion as shown in Fig. 1D.

Next, as shown in Fig. 1E, the bread 1 is taken out and placed in a hot air dryer 3 and held at a predetermined temperature for a predetermined time so as to be dried by hot air until the moisture content of the bread 1 decreases to 5.9 mass% or lower, for example. By this process, a processed product is obtained which is curved along the major axis of the elliptic shape with the outer edges curled as shown in Fig. 9, for example. Further, by applying seasoning or the like to the processed product, a snack is completed.

Incidentally, the processed product shown in Fig. 9 was obtained as follows. From French bread ("Parisian" (Brand name) by Yamazaki Baking Co., Japan) with a crust-portion moisture content of 21.0 mass%, a crustless-portion moisture content of 26.0 mass% and an oil content of 0.9 mass%, a slice was cut out with a slicer in a thickness of 7mm. And the slice was used as material, and the above-mentioned gap t was set at 2mm, and conditions of heating under pressure were 60°C temperature, 4.9 × 10⁻¹MPa pressure and 40sec holding time, and a drying condition was 90°C for 30min.

The moisture content of the bread just after the heating was 25.1 mass%, the thickness of the bread just after the heating was 1.6mm, the moisture content of the bread (processed product) after the drying was 1.7 mass%, and the thickness of the bread (processed product) after the drying was 1.6mm. The texture of the processed product was similar to that of potato chips.

Because crusted bread was used as material to obtain the processed product by the above method, this processed product is more savory than those produced from crustless bread. Another advantage of this processed product is that because there is the crust along the outer edges of this processed product, the quantity of the processed product breaking during production of the processed product and during transportation of the merchandise is reduced.

### (Sixth Embodiment)

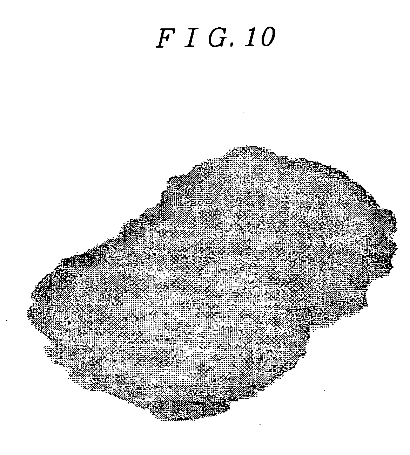

A method for producing a snack according to a sixth embodiment of the present invention will be described with reference to Figs. 3A to 3C and 10. In this method, a slice with a thickness of not less than 1mm cut out of bread with brown-baked crust is used as material, and placed between a pair of flat pressurizing surfaces, and heated while pressure is applied until the moisture content of the material decreases to a predetermined value (not more than 5.9 mass%) less than the original moisture content of the material.

By cutting French bread available on the market (bread with a moisture content of 26 mass%, for example) with a slicer, a crusted bread is obtained with a thickness of about 7mm in a substantially elliptic cross section with a 80mm major axis and a 40mm minor axis.

Then, as shown in Fig. 3A, the bread 1 is heated under pressure in the press device 2. In the press device 2, a pair of flat pressurizing surfaces is composed by the upper surface 21a of the steel-made lower part 21 and the lower surface 22a of the steel-made upper part 22. The bread 1 is placed on the upper surface 21a of the lower part 21 of the press device 2.

Under this condition, as shown in Fig. 3B, the upper part 22 is lowered until the distance between the pair of pressurizing surfaces 21a and 22a reaches a predetermined gap t to press the bread 1. This gap t is to be set suitably at one's discretion according to the thickness of bread 1 as material and the thickness of a processed product to produce. Under this condition, the bread is heated and pressurized simultaneously by holding it at a predetermined temperature and a predetermined pressure for a predetermined time until the moisture content decreases to about 5 mass%, for example.

After the elapse of a predetermined time, as shown in Fig. 3C, the upper part 22 is raised and the pressurization is stopped. Under this condition, the bread 1 is pressed out into a flat plate shape. Therefore, a processed product in a substantially flat shape is obtained as shown in Fig. 10, for example. By applying seasoning or the like to this processed product, a snack is completed.

Incidentally, the processed product shown in Fig. 10 was obtained as follows. From French bread ("Parisian" (Brand name) by Yamazaki Baking Co., Japan) with a crust-portion moisture content of 21.0 mass%, a crustless-portion moisture content of 26.0 mass% and an oil content of 0.9 mass%, a slice was cut out with a slicer in a thickness of 7mm and used as material. And the above-mentioned gap t was set at 2mm and conditions of heating under pressure were 140°C temperature, 4.9 × 10⁻¹MPa pressure and 120 sec holding time.

The moisture content of the processed product was 1. 7 mass%, and the thickness was 1.3mm. The texture of the processed product was similar to that of potato chips.

Because crusted bread was used as material to obtain the processed product by the above method, this processed product is more savory than those produced from crustless bread. Another advantage of this processed product is that because this processed product has the crusty outer edges, the quantity of the processed product breaking during production of the processed product and during transportation of the merchandise is reduced.

### (Seventh Embodiment)

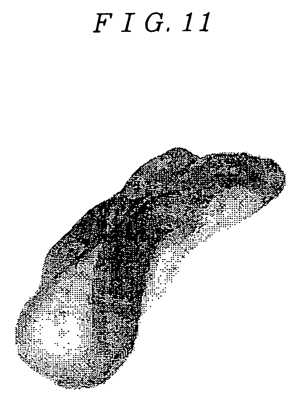

A method for producing a snack according to a seventh embodiment of the present invention will be described with reference to Figs. 5A to 5D and 11. In this method, a slice with a thickness of not less than 1mm cut out of bread with brown-baked crust is used as material and placed between a pair of pressurizing surfaces curved in a bow shape, and heated while pressure is applied until the moisture content of the material decreases to a predetermined value less than the original moisture content of the material (a value not less than 6. 0 mass% and below the original moisture content of the material), and after the heating, the material is dried without applying pressure (by additionally performing the above-mentioned drying process, a processed product with the curled outer edges is obtained.)

First, by cutting French bread available on the market (bread with a moisture content of 26 mass%, for example) with a slicer, crusted bread is obtained with a thickness of about 7mm and in a substantially elliptic section with a 80mm major axis and a 40mm minor axis, for example.

Then, as shown in Fig. 5A, the bread 1 is heated under pressure in the press device 2. In this press device 2, bow-shaped concave surfaces 21b are formed at predetermined intervals on the upper surface of a lower part 21 made of steel, and convex surfaces 22b, which correspond to the concave surfaces 21b, are formed on the lower surface of an upper part 22 made of steel. A concave surface 21b and a convex surface 22b compose a pair of curved pressurizing surfaces. The bread 1 is placed on the concave surface 21b of the lower part 21 of the press device 2.

Under this condition, as shown in Fig. 5B, the upper part 22 is lowered until the distance between the pair of the concave surface 21b and the convex surface 22b reaches a predetermined gap t to press the bread 1. This gap t is to be set suitably at one's discretion according to the thickness of the bread 1 as material and the thickness of a processed product to produce. Under this condition, the material is heated and pressurized simultaneously by holding it at a predetermined temperature and a predetermined pressure for a predetermined time until the moisture content decreases to about 25 mass%, for example.

After the elapse of a predetermined time, as shown in Fig. 5C, the upper part 22 is raised and the pressurization is stopped. Under this condition, the bread 1 is in a bow-shaped plate having a concave surface 11, which corresponds to the concave surface 21b as one pressurizing surface and a convex surface 12, which corresponds to the convex surface 22b as the other pressurizing surface. Having a still high moisture content, this bread 1 is in such a shape that the concave surface 12 and the convex surface 11 partially deviate from the circular-arc of the bow shape.

Then, as shown in Fig. 5D, the bread 1 is taken out and put in a hot air dryer 3, and held at a predetermined temperature for a predetermined time to be dried by hot air such that the moisture content of the bread 1 decreases to not higher than 5.9 mass%, for example. As a result, a processed product is obtained in a shape curled such that open-end portions of the circular-arc of the bow shape came close together. In some case where the curling occurs to an excessive degree, a processed product as shown in Fig. 11 may be obtained. By applying seasoning or the like to the processed product, a snack can be completed.

Incidentally, the processed product shown in Fig. 11 was obtained as follows. From French bread ("Parisian" (Brand name) by Yamazaki Baking Co., Japan) with a crust-portion moisture content of 21.0 mass%, a crustless-portion moisture content of 26.0 mass% and an oil content of 0.9 mass%, a slice was cut out with a slicer in a thickness of 7mm. And the slice was used as material, and the above-mentioned gap t was set at 2mm, and conditions of heating under pressure were 60°C temperature, 4.9 × 10⁻¹MPa pressure and 90sec holding time, and a drying condition was 90°C for 30min.

The moisture content of the bread just after the pressurized heating was 24.8 mass%, the thickness of the bread just after the heating was 1.6mm, the moisture content of the bread (processed product) after the drying was 1.7 mass%, and the thickness of the bread (processed product) after the drying was 1.6mm. The texture of the processed product was similar to that of potato chips.

Because crusted bread was used as material to obtain the processed product by the above method, this processed product is more savory than those produced from crustless bread. Another advantage of this processed product is that because this processed product has the crusty outer edges, the quantity of the processed product breaking during production of the processed product and during transportation of the merchandise is reduced.

### (Eighth Embodiment)

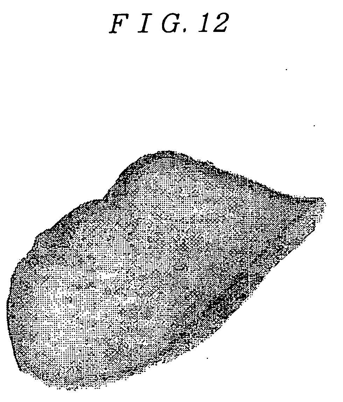

A method for producing a snack according to an eighth embodiment of the present invention will be described with reference to Figs. 7A to 7C and 12. In this method, a slice with a thickness of not less than 1mm cut out of bread with brown-baked crust is used as material and placed between a pair of pressurizing surfaces curved in a bow shape, and heated while pressure is applied until the moisture content of the material decreases to a predetermined value (not more than 5.9 mass%) less than the original moisture content of the material.

First, by cutting French bread on the market (bread with a moisture content of 26 mass%, for example) by a slicer, a crusted slice is obtained with a thickness of about 7mm in a substantially elliptic shape with a 80mm major axis and a 40mm minor axis, for example.

Next, as shown in Fig. 7A, the bread 1 is heated under pressure in the press device 2. In this press device 2, bow-shaped concave surfaces 21b are formed at predetermined intervals on the upper surface of a lower part 21 of steel, and convex surfaces 22b, which correspond to the concave surfaces 21b, are formed on the lower surface of an upper part 22 of steel. A concave surface 21b and a convex surface 22b compose a pair of curved pressurizing surfaces. The bread 1 is placed on the concave surface 21b of the lower part 21 of the press device 2.

Under this condition, as shown in Fig. 7B, the upper part 22 is lowered until the distance between the pair of pressurizing surfaces 21b and 22b reaches a predetermined gap t to thereby flatten the bread 1. This gap t is to be set suitably at one's discretion according to the thickness of bread 1 as material and the thickness of a processed product to produce. Under this condition, the material is heated and pressurized simultaneously by holding it at a predetermined temperature and a predetermined pressure for a predetermined time until the moisture content decreases to about 5 mass%, for example.

After the elapse of a predetermined time, as shown in Fig. 7C, the upper part 22 is raised and the pressurization is stopped. Under this condition, the bread 1 is a bow-shaped plate having a concave surface 11, which corresponds to the concave surface 21b as one pressurizing surface, and a convex surface 12, which corresponds to the convex surface 22b as the other pressurizing surface. Thus, a processed product is obtained with the minor-axis portion curved in a circular arc as shown in Fig. 12, for example. By applying seasoning or the like to this processed product, a snack is completed.

Incidentally, the processed product shown in Fig. 12 was obtained as follows. From French bread ("Parisian" (Brand name) by Yamazaki Baking Co., Japan) with a crust-portion moisture content of 21.0 mass%, a crustless-portion moisture content of 26.0 mass% and an oil content of 0.9 mass%, a slice was cut out with a slicer in a thickness of 7mm. And the slice was used as material, and a processed product was obtained by drying the material with the above-mentioned gap t was set at 2mm, and conditions of heating under pressure were 130°C temperature, 4.9 × 10⁻¹MPa pressure and 120sec holding time.

The moisture content of the processed product heating was 1.7 mass%, and the thickness was 1.8mm. The texture of the processed product was similar to that of potato chips.

Because crusted bread is used as material to obtain processed product by the above method, this processed product is more savory than those produced from crustless bread. Another advantage of this processed product is that because this processed product has the crusty outer edges, the quantity of the processed product breaking during production of the processed product and during transportation of the merchandise is reduced.

Processed products such as shown in Fig. 12 have an advantage that because they can be piled one on top of another in a container, they can be packed densely in a container and are easy to pick up when eating.

### (Ninth Embodiment)

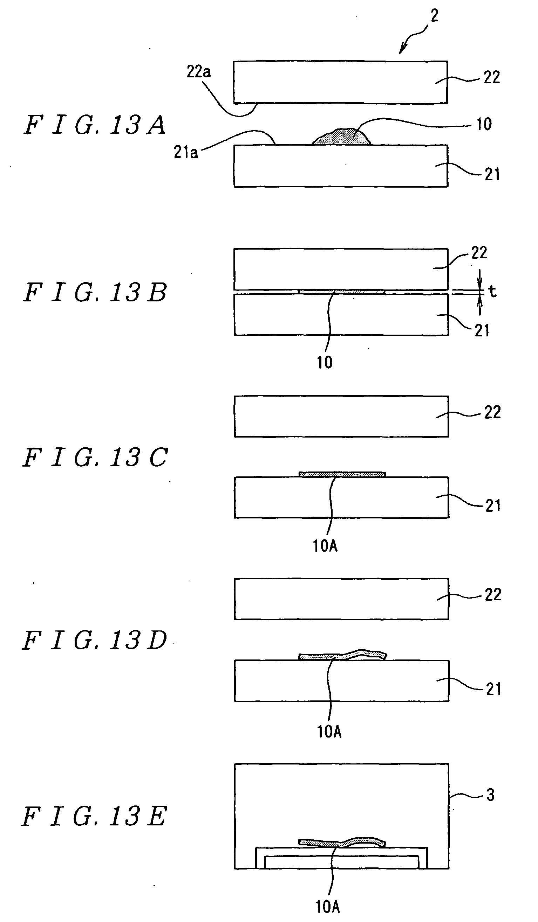

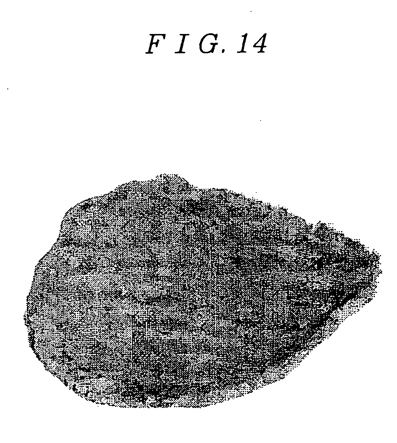

A method for producing a snack according to a ninth embodiment of the present invention will be described with reference to Figs. 13A to 13E and 14. In this method, crumbs made by crushing the brown-baked crust of bread are used as material, and the material is placed between a pair of flat pressurizing surfaces and heated while pressure is applied until the moisture content decreases to a predetermined value less than the original moisture content of the material (a value not less than 6.0 mass% and below the original moisture content of the material), and after the heating, the material is dried without applying pressure (by additionally performing the drying process, a processed product with the curled outer edges is obtained.)

First, by crushing the crust of bread, which is available on the market, with a grinding mill to a particle diameter of about 2 to 5 mm for example, a large number of granules are obtained. If the moisture content of the granules is below 10 mass%, the granules are added with water to adjust the moisture content so as to be 10 mass% or higher, and then the granules are used as material. If the moisture content of the granules is 10 mass% or higher, the granules in this condition are used as material.

Then, as shown in Fig. 13A, a material 10 composed of granules as mentioned above is heated under pressure by the press device 2. In the press device 2, a pair of flat pressurizing surfaces is composed by the upper surface 21a of the steel-made lower part 21 and the lower surface 22a of the steel-made upper part 22. A predetermined amount of material 10 composed of granules mentioned above is placed on the upper surface 21a of the lower part 21 of the press device 2.

Under this condition, as shown in Fig. 13B, the upper part 22 is lowered until the distance between the pair of pressurizing surfaces 21a and 22a reaches a predetermined gap t to press the material 10 composed of granules. This gap t is to be set suitably at one's discretion according to the particle size and the quantity of granules and the thickness of a processed product to produce. Under this condition, the material is heated and pressurized simultaneously by holding it at a predetermined temperature and a predetermined pressure for a predetermined time until the moisture content of the material 10 decreases to an appropriate value (not less than 6 mass%).

After the elapse of a predetermined time, as shown in Fig. 13C, the upper part 22 is raised and the pressurization is stopped. Under this condition, the material is a substantially elliptic plate object 10A, which is a joined body of a large number of granules and in a flat plate shape. However, still having a high moisture content, as time passes, the plate 10A changes from a flat plate shape to a shape that has a slightly curved portion as shown in Fig. 13D.

Next, as shown in 13(e), the plate object 10A is extracted and placed in a hot air dryer 3, and heated by hot air by holding it at a predetermined temperature for a predetermined time until the moisture content of the plate object 10A decreases to not more than 5.9 mass%, for example. As a result, a processed product is obtained in an elliptic plate shape that the outer edges are curled as shown in Fig. 14, for example. By applying seasoning or the like to the processed product, a snack is completed.

Meanwhile, a processed product shown in Fig. 14 was obtained as follows. From bread ("Honjikomi" (Brand name) by Fujipan Co., Japan) with a crust-portion moisture content of 29. 1 mass% and an oil content of 2.5 mass%, the crust was crushed to a particle diameter of 2∼5mm and used in this condition as material, and the above-mentioned gap t was set at 2mm, and conditions of heating under pressure were 60°C temperature, 4.9 × 10⁻¹MPa pressure and 90sec holding time, and a drying condition was 90°C temperature for 30min.

The moisture content of the plate object just after the heating was 26.8 mass% and the thickness of the plate object just after the heating was 1.8mm, and the moisture content of plate object (processed product) after the drying was 4.7 mass% and the thickness of the plate object (processed product) after the drying was 1.7mm. The texture of the processed product was similar to potato chips.

The processed product obtained by this method has an advantage that because the crushed crust is used as material, the crust, which is thrown away in most cases, can be used effectively.

### (Tenth Embodiment)

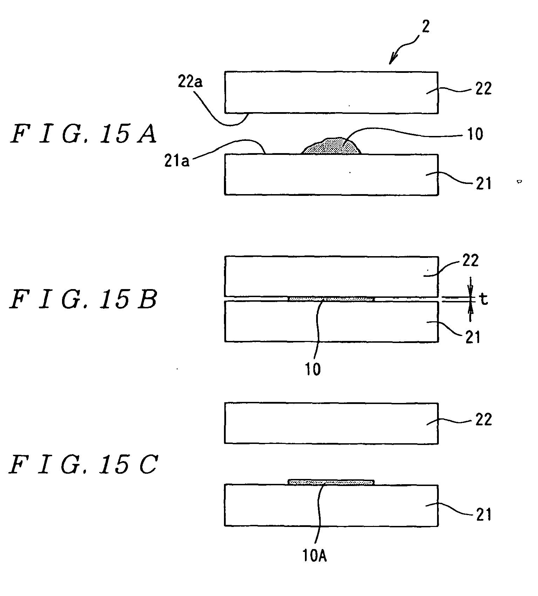

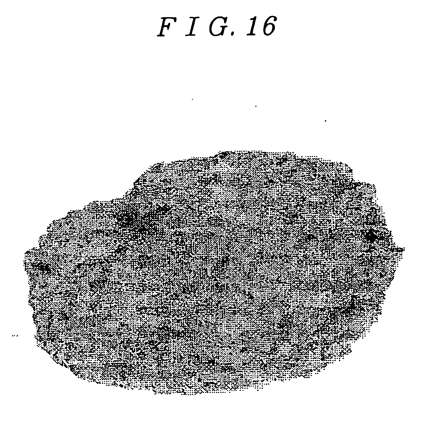

A method for producing a snack according to a tenth embodiment of the present invention will be described with reference to Figs. 15A to 15C and 16. In this method, crumbs made by crushing the brown-baked crust of bread is used as material, and placed between a pair of fine pressurizing surfaces and heated while pressure is applied until the moisture content decreases to a predetermined value (not more than 5.9 mass%).

First, by crushing the crust of bread, which is available on the market, with a grinding mill to a particle diameter of about 2 to 5 mm, a large number of granules are obtained. If the moisture content of the granules is below 10 mass%, the granules are added with water to adjust the moisture content so as to be 10 mass% or higher, and then the granules are used as material. If the moisture content is 10 mass% or higher, the granules in this condition are used as material.

Then, as shown in Fig. 15A, a material 10 composed of granules as mentioned above is heated under pressure in the press device 2. In the press device 2, a pair of flat pressurizing surfaces is composed by the upper surface 21a of the steel-made lower part 21 and the lower surface 22a of the steel-made upper part 22. A predetermined amount of material 10 composed of granules mentioned above is placed on the upper surface 21a of the lower part 21 of the press device 2.

Under this condition, as shown in Fig. 15B, the upper part 22 is lowered until the distance between the pair of pressurizing surfaces 21a and 22a reaches a predetermined gap t to press the material 10 composed of granules. This gap t is to be set suitably at one's discretion according to the particle size and the quantity of granules and the thickness of a processed product to produce. Under this condition, the material is heated and pressurized simultaneously by holding it at a predetermined temperature and a predetermined pressure for a predetermined time until the moisture content of the material 10 decreases to an appropriate value (not more than 5.9 mass%).

After the elapse of a predetermined time, as shown in Fig. 15C, the upper part 22 is raised and the pressurization is stopped. Under this condition, the material is a joined body of a large number of granules and is in the form of a substantially elliptic plate object 10A. As a result, a processed product in a substantially elliptic and flat plate shape can be obtained as shown in Fig. 16, for example. By applying seasoning or the like to the processed object, a snack is completed.

Meanwhile, a processed product shown in Fig. 16 was obtained as follows. From bread ("Honjikomi" (Brand name) by Fujipan Co., Japan) with a crust-portion moisture content of 29. 1 mass% and an oil content of 2.5 mass%, the crust was crushed to a particle diameter of 2∼5mm. And the particles were used in this condition as material, and the above-mentioned gap t was set at 2mm, and conditions of heating under pressure were 140°C temperature, 4.9 × 10⁻¹MPa pressure and 120sec holding time.

The moisture content of the processed product was 5.5 mass% and the thickness was 1.3mm. The texture of the processed product was similar to potato chips.

The processed product obtained by this method has an advantage that because the crushed crust is used as material, the crust which is thrown away in most cases, can be used effectively.

### (Eleventh Embodiment)

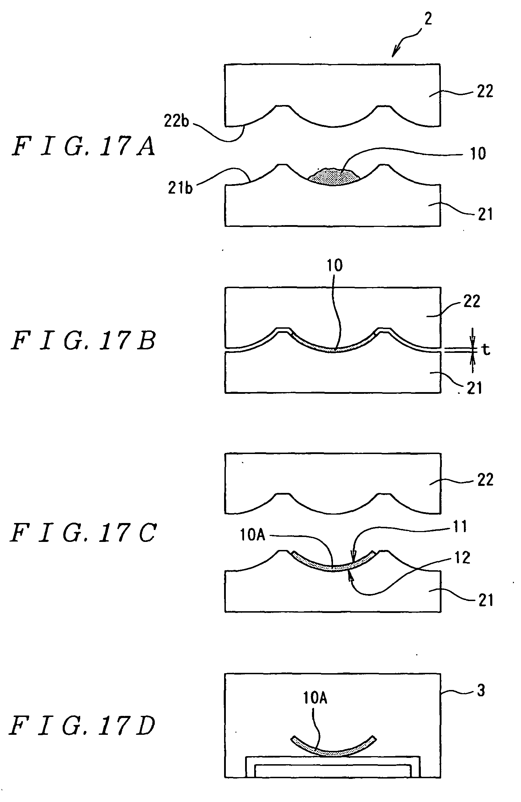

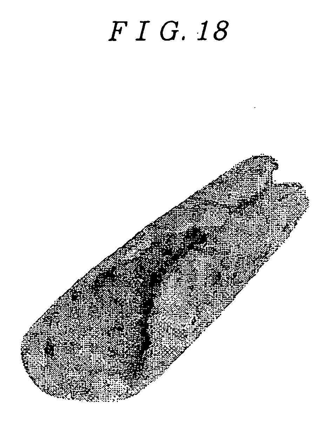

A method for producing a snack according to an eleventh embodiment of the present invention will be described with reference to Figs. 17A to 17D and 18. In this method, crumbs made by crushing the brown-baked crust of bread are used as material, and the material is placed between a pair of pressurizing surfaces curved in a bow shape and heated while pressure is applied until the moisture content decreases to a predetermined value less than the original moisture content of the material (a value not less than 6.0 mass% and below the original moisture content of the material), and after the heating, the material is dried without applying pressure (by additionally performing the above-mentioned drying process, a processed product with the curled outer edges is obtained.)

First, by crushing the crust of bread, which is available on the market, with a grinding mill to a particle diameter of about 2 to 5 mm for example, a large number of granules are obtained. If the moisture content of the granules is below 10 mass%, the granules are added with water to adjust the moisture content so as to be 10 mass% or higher, and then the granules are used as material. If the moisture content of the granules is 10 mass% or higher, the granules in this condition are used as material.

Then, as shown in Fig. 17A, the material 10 composed of the above-mentioned granules is heated under pressure in the press device 2. In this press device 2, bow-shaped concave surfaces 21b are formed at predetermined intervals on the upper surface of a lower part 21 made of steel, and convex surfaces 22b, which correspond to the concave surfaces 21b, are formed on the lower surface of an upper part 22 made of steel. A concave surface 21b and a convex surface 22b compose a pair of pressurizing surfaces curved in a bow shape. A predetermined amount of material 10 composed of the above-mentioned granules is placed on the concave surface 21b of the lower part 21 of the press device 2.

Under this condition, as shown in Fig. 17B, the upper part 22 is lowered until the distance between the pair of pressurizing surfaces 21b and 22b reaches a predetermined gap t to press the material 10 composed of granules. This gap t is to be set suitably at one's discretion according to the particle size and the quantity of granules and the thickness of a processed product to produce. Under this condition, the material is heated and pressurized simultaneously by holding it at a predetermined temperature and a predetermined pressure for a predetermined time until the moisture content of the material 10 decreases to an appropriate value (not less than 6 mass%).

After the elapse of a predetermined time, as shown in Fig. 17C, the upper part 22 is raised and the pressurization is stopped. Under this condition, the material is a joined body of a large number of granules and is in a bow-shaped plate object 10A having a concave surface 11, which corresponds to the concave surface 21b as one pressurizing surface, and a convex surface 12, which corresponds to the convex surface 22b as the other pressurizing surface. Having a still high moisture content, this plate object 10A is in such a shape that the concave surface 12 and the convex surface 11 partially deviate from the circular-arc of a bow shape.

Next, as shown in Fig. 17D, this plate object 10A is extracted and placed in a hot air dryer 3, and dried by hot air by holding it at a predetermined temperature for a predetermined time until the moisture content of the plate object 10A decreases to 5.9 mass% or lower, for example. As a result, a processed product is obtained in a shape curled such that open-end portions of circular-arc of the bow shape came close together as shown in Fig. 18. By applying seasoning or the like to the processed product, a snack is completed.

Meanwhile, a processed product shown in Fig. 18 was obtained as follows. From bread ("Honjikomi" (Brand name) by Fujipan Co., Japan) with a crust-portion moisture content of 29.1 mass% and an oil content of 2.5 mass%, the crust was crushed to a particle diameter of 2∼5mm. And the particles were used in this condition as material, and the above-mentioned gap t was set at 2mm, and conditions of heating under pressure were 60°C temperature, 4.9 × 10⁻¹MPa pressure and 90sec holding time, and a drying condition was 90°C for 30min.

The moisture content of the plate object just after pressurized heating was 27.1 mass% and the thickness of the plate object just after pressurized heating was 2.1mm, and the moisture content of plate object (processed product) after drying was 4.7 mass% and the thickness of the plate object (processed product) after drying was 2.0mm. The texture of the processed product was similar to potato chips.

The processed product obtained by this method has an advantage that because the crushed crust is used as material, the crust, which is thrown away in most cases, can be used effectively.

### (Twelfth Embodiment)

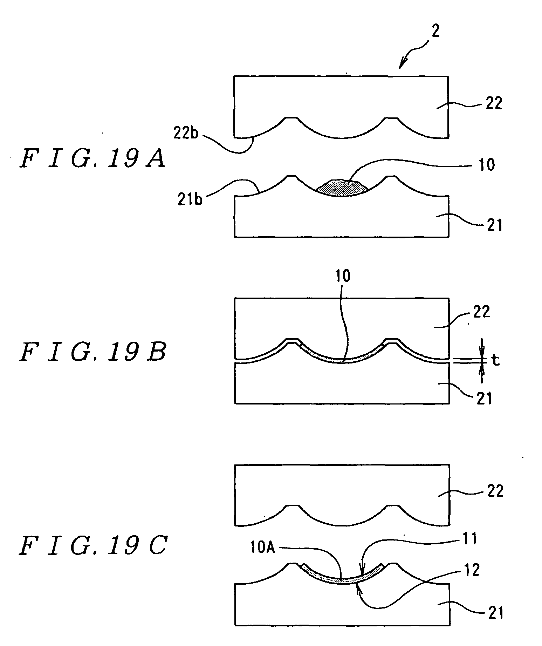

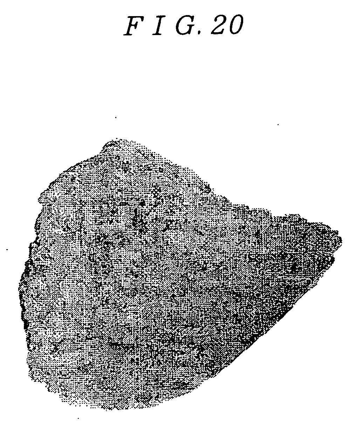

A method for producing a snack according to a twelfth embodiment of the present invention will be described with reference to Figs. 19A to 19C and 20. In this method, crumbs made by crushing the brown-baked crust of bread are used as material, and the material is placed between a pair of pressurizing surfaces curved in a bow shape and heated while pressure is applied until the moisture content of the material decreases to a predetermined value (not more than 5.9 mass%) less than the original moisture content of the material.

First, by crushing the crust of bread, which is available on the market, with a grinding mill to a particle diameter of about 2 to 5 mm for example, a large number of granules are obtained. If the moisture content of the granules is below 10 mass%, the granules are added with water to adjust the moisture content so as to be 10 mass% or higher, and then the granules are used as material. If the moisture content of the granules is 10 mass% or higher, the granules in this condition are used as material.

Then, as shown in Fig. 19A, the material 10 composed of the above-mentioned granules is heated under pressure in the press device 2. In this press device 2, bow-shaped concave surfaces 21b are formed at predetermined intervals on the upper surface of a lower part 21 made of steel, and convex surfaces 22b, which correspond to the concave surfaces 21b, are formed on the lower surface of an upper part 22 made of steel. A concave surface 21b and a convex surface 22b compose a pair of curved pressurizing surfaces. A predetermined amount of material 10 composed of the above-mentioned granules is placed on the concave surface 21b of the lower part 21 of the press device 2.

Under this condition, as shown in Fig. 19B, the upper part 22 is lowered until the distance between the pair of pressurizing surfaces 21b and 22b reaches a predetermined gap t to press the material 10 composed of granules. This gap t is to be set suitably at one's discretion according to the particle size and the quantity of granules and the thickness of a processed product to produce. Under this condition, the material 10 is heated and pressurized simultaneously by holding it at a predetermined temperature and a predetermined pressure for a predetermined time until the moisture content of the material 10 decreases to not less than 5 mass%, for example.

After the elapse of a predetermined time, as shown in Fig. 19C, the upper part 22 is raised and the pressurization is stopped. Under this condition, the material is a joined body of a large number of granules and is in a bow-shaped plate object 10A having a concave surface 11, which corresponds to the convex surface 21b as one pressurizing surface, and a convex surface 12, which corresponds to the convex surface 22b as the other pressurizing surface. As a result, a processed product is obtained with the minor axis curved in a circular-arc as shown in Fig. 20, for example. By applying seasoning or the like to this processed product, a snack is completed.

Incidentally, the processed product shown in Fig. 20 was obtained as follows. From bread ("Honjikomi" (Brand name) by Fujipan Co., Japan) with a crust-portion moisture content of 29.1 mass% and.an oil content of 2.5 mass%, the crust was crushed to a particle diameter of 2∼5mm. And the particles were used in this condition as material, and the above-mentioned gap t was set at 2mm, and conditions of heating under pressure were 130°C temperature, 4.9 × 10⁻¹MPa pressure and 120sec holding time.

The moisture content of this processed product was 4.7 mass% and the thickness was 1.9mm, and the texture was similar to potato chips.

The processed product obtained by this method has an advantage that because the crushed crust is used as material, the crust, which is thrown away in most cases, can be used effectively.

Processed products such as shown in Fig. 20 have an advantage that because they can be piled one on top of another in a container, they can be packed densely in a container and are easy to pick up when eating.

### (Thirteenth Embodiment)

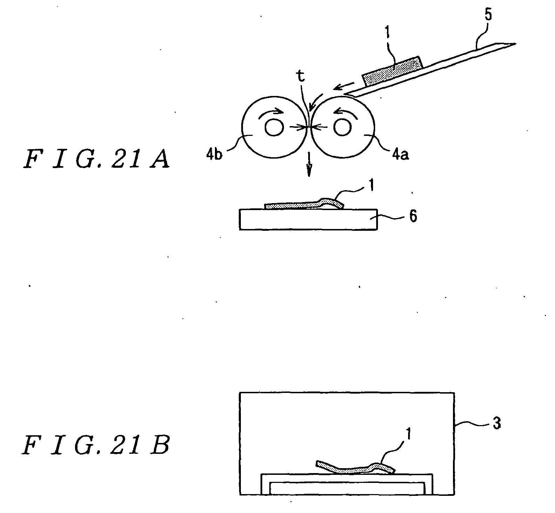

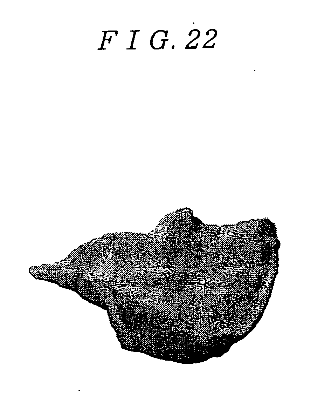

A method for producing a snack according to an embodiment not forming part of the present invention as such will be described with reference to Figs. 21A, 21B and 22. This method comprises rolling out a brown-baked crusted slice with a thickness of not less than 5mm cut out of bread is used as material (with a roller gap of not more than 2mm, for example) and heating the rolled-out slice until the moisture content decreases to a predetermined value (not more than 5.9 mass%, for example) less than the original moisture content of the material.

By cutting bread available on the market (bread with a moisture content of about 35 mass%, for example) with a slicer, a crusted slice with a 50mm × 30mm rectangular cross section and a thickness of 5mm, 10mm or 20mm is obtained.

Then, as shown in Fig. 21A, the slice 1 is rolled out by a dough sheet former used to produce noodle (a device to roll a lump of dough into a dough sheet).

This dough sheet former comprises a pair of rollers 4a, 4b, a tilted plate to guide an obj ect to roll between the rollers, and a receiver block 6 arranged below the rollers 4a, 4b. The two rollers 4a, 4b are arranged in a horizontal direction with a predetermined gap t (not more than 2mm) spaced between them. The tilted plate 5 is arranged so that an object to be rolled is guided from a direction lateral to the roller 4a to the top of the roller 4a. The receiver block 6 receives a rolled object that drops from between the rollers.

As shown in Fig. 21B, the bread 1 rolled by the dough sheet former is put into a hot air dryer 3, and by holding it at a predetermined temperature for a predetermined time, the bread 1 is dried (heated) by hot air until the moisture content of the bread 1 decreases to not more than 5.9 mass%, for example. As a result, a processed product is obtained in such a shape that the outer edges are curled as shown in Fig. 22, for example. By adding seasoning or the like to the processed product, a snack is completed.

The processed product shown in Fig. 22 was obtained by using a 5mm-thick slice of bread ("Honjikomi" (Brand name) by Fujipan Co., Japan) with a moisture content of 36.3 mass% and an oil content of 2.5 mass% cut out by a slicer, and by rolling and heating under conditions as follows. The rolling conditions were: roller diameter: 110 mm, roller peripheral velocity: 324m/hour, and roller gap t: 1mm, and the heating condition was 90°C temperature for 40min.

The thickness of the bread just after rolling was 1.4mm, the moisture content of the processed product (bread dried by heating) was 4.5 mass%, and the thickness of the processed product was 2.6mm. The texture of this processed product was similar to potato chips.

In addition, by using a slice of the same bread as mentioned above cut out in a thickness of 10mm with a slicer and by rolling and heating it under the same conditions as mentioned above, a processed product was obtained in such a shape that the outer edges are curled. In this case, the thickness of the bread just after rolling was 1. 6mm, the moisture content of the processed product as 4.5 mass% and the thickness of the processed product was 1.9mm. The texture of this processed product resembled potato chips.

Moreover, by using as material a slice of the same bread as mentioned above in a thickness of 20mm cut out with a slicer and by rolling and heating it under the same conditions as mentioned above, a processed product was obtained in such a shape that the outer edges are curled. In this case, the thickness of the bread just after rolling was 1.7mm, and the moisture content of the processed product was 4.7 mass%, and the thickness of the processed product was 2.0mm. The texture of the processed product was similar to potato chips.

In addition, by using slices of the same bread as above cut out in a thickness of 5mm, 10mm and 20mm as material, and by rolling them with the roller gap t set at different values of 8mm, 5mm, 3mm or 2mm with the other conditions unchanged, the materials of a thickness of 5mm and 10mm did not take such a shape that the outer edges were curled after the rolling when the above-mentioned roller gap was at any of the above-mentioned values.

In the case of a material with a thickness of 20mm, after it was rolled, the material did not assume a shape that the outer edges were curled at the roller gap of 8mm, 5mm and 3mm. When the roller gap was 2mm, however, the thickness of the bread just after it was rolled was 3.4mm, and the processed product obtained by heating under the same conditions mentioned as above had a moisture content of 4.7 mass%, and the thickness of the processed product was 3.7mm. The texture of this processed product resembled potato chips.

### (Fourteenth Embodiment)

Description will be made of a method for producing a snack according to an embodiment not forming part of the present invention as such. This method comprises rolling out a brown-baked sliced bread with a thickness of not less than 5mm is used as material (with a roller gap of not more than 2mm, for example) and heating the rolled-out slice until the moisture content decreases to a predetermined value (not more than 5.9 mass%) less than the original moisture content of the material.

First, by cutting a roll bread (one with a moisture content of about 30 mass%, for example) with a slicer, a crusted slice is obtained in a substantially elliptic cross section with a 55mm major axis and a 40mm minor axis, for example, in a thickness of 5mm, 10mm or 20mm.

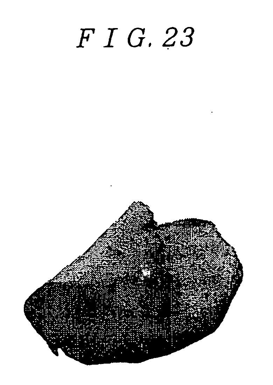

Then, just as in the thirteenth embodiment, by rolling out the bread slice by a dough sheet former used to manufacture noodle (a device for transforming a lump of dough into a dough sheet), then placing a rolled-out slice in a hot air dryer, and holding it at a predetermined temperature for a predetermined time, the slice is dried by hot air (heated) until the moisture content decreases to not more than 5.9 mass%, for example. Consequently, a processed product is obtained which is curled along the major axis of its elliptic shape as shown in Fig. 23, for example. By adding seasoning or the like to the processed product, a snack is completed.

The processed product shown in Fig. 23 is obtained by using a butter roll bread ("Chojiku Roll" (Brand name) by Shikishima Baking Co.) with a moisture content of 27.3 mass% and an oil content of 8.5 mass% as material, and cutting a 5-mm-thick slice out of the roll bread with a slicer, and by rolling and heating the bread slice under conditions as follows. The rolling conditions were; roller diameter: 110mm, roller peripheral velocity: 324m/hour and roller gap t: 1mm, and the heating condition was 90°C temperature for 40min.

The thickness of the bread slice just after it was rolled was 2.9mm, the moisture content of the processed product (the bread after drying by heating) was 4.4mass%, and the thickness of the processed product was 5.0mm. The texture of the processed products resembled potato chips.

Meanwhile, by using a 10-mm-thick slice cut out of the same roll bread as mentioned above as material and by rolling and heating it under the same condition as mentioned above, a processed product was obtained in such a shape that the outer edges were curled. In this case, the thickness of the bread just after it was rolled was 1.4mm, the moisture content of the processed product was 4.4 mass%, and the thickness of the processed products was 3.4mm. The texture of the processed product was similar to potato chips.

Moreover, by using a 20-mm-thick slice cut out of the same roll bread as mentioned above with a slicer as material and by rolling and heating the bread slice under the same conditions as mentioned above, a processed product was obtained in such a shape that the outer edges were curled. In this case, the thickness of the bread just after it was rolled was 1.4mm, the moisture content of the processed product as 4.4 mass%, and the thickness of the processed product 2.0mm. The texture of this processed product was similar to potato chips.

Furthermore, by using slices cut out of the same roll bread as mentioned above in a thickness of 5mm, 10mm, and 20mm as material, and by rolling out the slice with the roller gap t changed to 3mm or 2mm with the other conditions unchanged, the materials of a thickness of 5mm and 10mm did not take a shape that the outer edges were curled after the rolling, in either case of the roller gaps.

In the case of material with a thickness of 20mm, after it is rolled, the material did not assume a shape that the outer edges were curled at the roller gaps of 3mm. When the roller gap was 2mm, the thickness of the bread just after rolling was 2.4mm, and the moisture content of a processed product obtained by heating under the same conditions as mentioned above was 4.5 mass%, and the thickness of the processed product was 3.8mm. The texture of this processed product was similar to potato chips.

### (Result of Questionnaire)

People participated in an evaluation test were asked to eat snacks (trial products) finished by adding seasoning to processed products produced by the methods of the respective embodiments of the present invention and also eat rusks available on the market to compare the texture and so on, and fill out a questionnaire, the results of which are as follows. Question: Which do you like better, the texture of trial products or that of rusks on the market? Answers: 0 person for rusks; 16 persons for the trial products Question: Which product do you want to buy? Answers: 5 persons for rusks; 11 persons for the trial products Question: Which do you like to eat more? Answers: 3 persons for rusks; 13 persons for the trial products Question: Which do you think worthy of the name of snack? Answers: 0 person for rusks; 16 persons for the trial product

From the above results, it has become clear that the trial products received a higher evaluation than rusks and that the trial products were accepted as snacks worthy of the name.

### INDUSTRIAL APPLICABILITY

As has been described, according to the methods of the present invention, it is possible to obtain foods for teatime other than rusks or applied products of rusks as cakes made from bread. Furthermore, by using material other than potato (bread, for example), snacks can be obtained which have the texture close to potato chips.

## Claims

1. A method for producing a snack, comprising a step of heating under pressure, which includes placing a material comprising bread (1) between a pair of pressurizing surfaces (21, 21a, 22, 22a), and heating said material under pressure,
**characterized in that** after said step of heating under pressure, which is performed by pressurizing said material until the moisture content of said material decreases to a value not less than 6.0 mass% and below the moisture content of said material, the method further comprises the step of drying the material without applying pressure to obtain a processed bread product having the outer edge that is to be curled.

2. A method for producing a snack, comprising a step of heating under pressure, which includes placing a material comprising bread (1) between a pair of pressurizing surfaces (21, 21a, 22, 22a), and heating said material under pressure,
**characterized in that**
said step of heating under pressure is performed by pressurizing said material until the moisture content of said material decreases to a value which is not more than 5.9 mass%, and until a thickness of the material is reduced to not less than 1.0 mm and not more than 5.0 mm.

3. The method according to Claim 1 or 2, wherein said pressurizing surfaces (21, 21 a, 22, 22a) are flat.

4. The method according to Claim 1or 2, wherein said pressurizing surfaces (21, 21 a, 22, 22a) are curved.

5. The method according to Claim 1 or 2, wherein said material is bread (1) without a brown-baked crust.

6. The method according to Claim 1 or 2, wherein said material is bread (1) with a brown-baked crust.

7. The method according to Claim 1 or 2, wherein said material is a slice with a thickness of not less than 1mm without a brown-baked crust cut out of the bread (1).

8. The method according to Claim 1 or 2, wherein said material is a slice with a thickness of not less than 1 mm cut out of the bread (1) and with a brown-baked crust remaining along outer edges of the bread (1).

9. The method according to Claim 1 or 2, wherein said material is crumbs made by crushing a brown-baked crust.

10. A snack produced by the method according to any one of Claims 1 to 9.

## Patentansprüche

1. Verfahren zum Herstellen einer Zwischenmahlzeit, das den Schritt des Erhitzens unter Druck umfasst, der das Anordnen eines Brot (1) enthaltenden Materials zwischen einem Paar Druckbeaufschlagungsoberflächen (21, 21a, 22, 22a) und das Erhitzen des Materials unter Druck enthält,
**dadurch gekennzeichnet, dass** das Verfahren nach dem Schritt des Erhitzens unter Druck, der durch Druckbeaufschlagung des Materials, bis der Feuchtigkeitsgehalt des Materials auf einen Wert von nicht weniger als 6,0 Massen-% und unter den Feuchtigkeitsgehalt des Materials abgenommen hat, ausgeführt wird, ferner den Schritt des Trocknens des Materials ohne Ausübung von Druck, um ein verarbeitetes Brotprodukt mit einer gewellten Außenkante zu erhalten, umfasst.

2. Verfahren zum Herstellen einer Zwischenmahlzeit, das den Schritt des Erhitzens unter Druck umfasst, der das Anordnen eines Brot (1) enthaltenden Materials zwischen einem Paar Druckbeaufschlagungsoberflächen (21, 21a, 22, 22a) und das Erhitzen des Materials unter Druck enthält,
**dadurch gekennzeichnet, dass**
der Schritt des Erhitzens unter Druck durch Druckbeaufschlagung des Materials, bis der Feuchtigkeitsgehalt des Materials unter einen Wert, der nicht größer als 5,9 Massen-% ist, abgenommen hat und bis eine Dicke des Materials auf nicht weniger als 1,0 mm und nicht mehr als 5,0 mm verringert ist, ausgeführt wird.

3. Verfahren nach Anspruch 1 oder 2, wobei die Druckbeaufschlagungsoberflächen (21, 21a, 22, 22a) eben sind.

4. Verfahren nach Anspruch 1 oder 2, wobei die Druckbeaufschlagungsoberflächen (21, 21a, 22, 22a) gekrümmt sind.

5. Verfahren nach Anspruch 1 oder 2, wobei das Material (1) Brot ohne braun gebackene Kruste ist.

6. Verfahren nach Anspruch 1 oder 2, wobei das Material Brot (1) mit einer braun gebackenen Kruste ist.

7. Verfahren nach Anspruch 1 oder 2, wobei das Material eine Scheibe mit einer Dicke von nicht weniger als 1 mm ohne braun gebackene Kruste, die aus dem Brot (1) ausgeschnitten ist, ist.

8. Verfahren nach Anspruch 1 oder 2, wobei das Material eine Scheibe mit einer Dicke von nicht weniger als 1 mm, die aus dem Brot (1) ausgeschnitten ist, und mit einer braun gebackenen Kruste, die längs Außenkanten des Brots (1) zurückbleibt, ist.

9. Verfahren nach Anspruch 1 oder 2, wobei das Material Krümel umfasst, die durch Zerkrümeln einer braun gebackenen Kruste hergestellt werden.

10. Zwischenmahlzeit, die durch das Verfahren nach einem der Ansprüche 1 bis 9 hergestellt wird.

## Revendications

1. Procédé de fabrication d'un en-cas, comportant une étape de chauffage sous pression, qui comprend le placement d'une substance comprenant du pain (1) entre une paire de surfaces pressantes (21, 21 a, 22, 22a), et le chauffage, sous pression, de ladite substance;
**caractérisé en ce que**, après ladite étape de chauffage sous pression, qui est effectuée en mettant sous pression ladite substance jusqu'à ce que la teneur en humidité de ladite substance baisse jusqu'à une valeur d'au moins 6,0 % en masse et inférieure à la teneur en humidité de ladite substance, le procédé comprend en outre une étape de séchage de la substance, sans pression appliquée, pour obtenir un produit à base de pain transformé dont le bord extérieur doit se trouver enroulé.

2. Procédé de fabrication d'un en-cas, comprenant une étape de chauffage sous pression, qui comprend le placement d'une substance comprenant du pain (1) entre une paire de surfaces pressantes (21, 21a, 22, 22a), et le chauffage, sous pression, de ladite substance,
**caractérisé en ce que** ladite étape de chauffage sous pression est effectuée en mettant sous pression ladite substance jusqu'à ce que la teneur en humidité de ladite matière baisse jusqu'à une valeur au plus égale à 5,9 % en masse, et jusqu'à ce que l'épaisseur de la substance soit comprise entre 1,0 mm au moins et 5,0 mm au plus.

3. Procédé selon la revendication 1 ou 2, dans lequel lesdites surfaces pressantes (21, 21 a, 22, 22a) sont plates.

4. Procédé selon la revendication 1 ou 2, dans lequel lesdites surfaces pressantes (21, 21 a, 22, 22a) sont incurvées.

5. Procédé selon la revendication 1 ou 2, dans lequel ladite substance est du pain (1) sans croûte.

6. Procédé selon la revendication 1 ou 2, dans lequel ladite substance est du pain (1) avec une croûte.

7. Procédé selon la revendication 1 ou 2, dans lequel ladite substance est une tranche coupée dans du pain (1), sans croûte, ayant une épaisseur d'au moins 1 mm.

8. Procédé selon la revendication 1 ou 2, dans lequel ladite substance est une tranche coupée dans du pain (1), ayant une épaisseur d'au moins 1 mm et présentant une croûtedisposée le long des bords extérieurs du pain (1).

9. Procédé selon la revendication 1 ou 2, dans lequel ladite substance prend la forme de miettes obtenues en écrasant une croûte.

10. En-cas fabriqué au moyen du procédé selon l'une des revendications 1 à 9.
